# EUROPÄISCHE PATENTANMELDUNG

(11) **EP 2 302 277 A2**
(43) Veröffentlichungstag der Anmeldung: **30.03.2011**
(21) Anmeldenummer: 10450138.2
(22) Anmeldetag: 02.09.2010
(51) Int. Cl.: F16L 59/11, F16L 59/02

(54) **Isolierungs-Halbschalenkörper**

(30) Priorität: 25.09.2009 AT 5962009 U
(71) Anmelder: Aqotec GmbH, 4890 Weissenkirchen im Attergau (AT)
(72) Erfinder: Holzinger, Christian, 5211 Friedburg (AT)
(74) Vertreter: Sonn & Partner Patentanwälte

(57) **Zusammenfassung**

Isolierungs-Halbschalenkörper (1) zum Umkleiden von Rohrleitungen oder dergl., mit Verbindungsmitteln zur Verbindung mit anderen Halbschalenkörpern (1) entlang zweier korrespondierender Grenzflächen (3, 4), die zwei ebene streifenförmige Längsflächen (3) zwischen einem inneren Hohlraum (2) und der Außenseite sind, wobei als Verbindungsmittel einerseits wenigstens ein von der einen Grenzfläche (3', 4') abstehender Steckerteil (5) und andererseits wenigstens eine in der anderen Grenzfläche (3", 4") angeordnete Stecker-Aufnahmevertiefung (6) vorgesehen sind, und die Anordnung von Steckerteil (5) und Stecker-Aufnahmevertiefung (6) für eine Verbindung ident ausgebildeter Halbschalenkörper (1) symmetrisch eingerichtet ist, wobei er als Winkel-Formteil mit zwei Schenkeln (1a, 1b) zur Umkleidung eines Rohrleitungs-Knies ausgebildet ist und am einen Schenkel (1a) der wenigstens eine Steckerteil (5) an der Außenseite und die wenigstens eine Stecker-Aufnahmevertiefung (6) an der Innenseite und am anderen Schenkel (1b) für eine Verbindung mit einem identen, kreuzweise gewendeten Winkel-Formteil der Steckerteil (5) an der Innenseite und die Stecker-Aufnahmevertiefung (6) an der Außenseite vorgesehen sind.

## Beschreibung

Die Erfindung betrifft einen Isolierungs-Halbschalenkörper gemäß dem Oberbegriff von Anspruch 1.

Ein derartiger Isolierungs-Halbschalenkörper zum Umkleiden von Rohrleitungen oder dergl., mit Verbindungsmitteln zur Verbindung mit anderen Halbschalenkörpern entlang zweier korrespondierender Grenzflächen, die zwei ebene streifenförmige Längsflächen zwischen einem inneren Hohlraum und der Außenseite sind, wobei als Verbindungsmittel einerseits wenigstens ein von der einen Grenzfläche abstehender Steckerteil und andererseits wenigstens eine in der anderen Grenzfläche angeordnete Stecker-Aufnahmevertiefung vorgesehen sind, und die Anordnung von Steckerteil und Stecker-Aufnahmevertiefung für eine Verbindung ident ausgebildeter Halbschalenkörper symmetrisch eingerichtet ist, ist aus der DE 18 88 843 U bekannt. Die Halbschalenkörper sind hier langgestreckte Teilhülsen für die isolierende Ummantelung von Rohren. Die Teilhülsen sind miteinander durch gegenseitigen Nut/Feder-Eingriff verbunden.

Zur Vermeidung von Wärmeverlusten ist es häufig erforderlich, Rohrleitungen, wie Heizungsrohre, Sanitärrohre, Heißwasserleitungen oder dergl., mit einer thermischen Isolierung zu ummanteln. Derartige Isolierungen bestehen üblicherweise aus zwei korrespondierenden Halbschalenkörpern, welche einen im Wesentlichen zylinderförmigen Hohlraum für die Rohrleitung definieren.

Zur einfachen Montage der Isolierung an der Rohrleitung ist es wünschenswert, wenn eine lösbare Schnappverbindung der Isolierungs-Halbschalenkörper entlang ihrer Verbindungs- bzw. Grenzflächen geschaffen wird. In diesem Zusammenhang wurden im Stand der Technik, über die vorstehend angeführte DE 18 88 843 U hinausgehend, noch verschiedene Möglichkeiten aufgezeigt.

In der AT 505 083 B1 sind zwei als Halbschalen ausgebildete Isolierelemente beschrieben, in welchen koaxial eine Rohrleitung aufnehmbar ist, wobei die Rohrleitung über eine Aufhängung an einem Gebäudeteil befestigt ist. Die beiden Isolierelemente sind über stufenförmige Grenzflächen der Isolierelemente, welche in einer Montagestellung ineinander greifen, miteinander verbindbar. Zur formschlüssigen Verbindung der Isolierelemente weisen die stufenförmigen Vorsprünge komplementäre Hinterschneidungen zur Erzielung einer Schwalbenschwanzverbindung auf. Von Nachteil ist zufolge dieser Schwalbenschwanzverbindung, dass zwei verschiedene Halbschalenkörper bzw. Isolierelemente zur Ummantelung der Rohrleitung erforderlich sind, was mit erhöhten Herstellungs- und Lagerkosten verbunden ist.

Aus der DE 295 20 476 U1 ist weiters eine vergleichsweise komplizierte Isolierung mit zwei Halbschalenteilen bekannt, die an einer Längsseite über ein Filmscharnier einstückig miteinander verbunden sind. Um im zusammengeklappten Zustand ein ungewolltes selbsttätiges Öffnen des Isolationskörpers zu verhindern, ist ein Halbschalenteil mit einem Verriegelungsvorsprung mit Hinterschnitt versehen, welcher in eine entsprechende Ausnehmung des anderen Halbschalenteils greift. Auch diese Isolierung ist aufwendig und teuer in der Herstellung.

Vergleichbare Schalenkörper sind zudem in einem anderen Zusammenhang bekannt: Aus der US 2006/0213572 sind Halbschalenkörper für die Umhüllung von elektrischen Kabeln bekannt. Die WO 1995/002090 betrifft schalenförmige Verkleidungselemente für eine verschiedenfärbige Verkleidung von Masten.

Allen vorstehenden Schalenkörpern gemeinsam ist, dass nur gerade verlaufende Rohre etc. damit ummantelt werden können.

Aufgabe der Erfindung ist es, einen konstruktiv einfachen, kostengünstig herstellbaren und einfach zu montierenden Isolierungs-Halbschalenkörper der eingangs angeführten Art anzugeben, mit welchem eine verlässlich haltbare und zuverlässige Ummantelung von einem Rohrleitungs-Knie, insbesondere einem 90°-Knie oder dergl., mit guter Isolierwirkung ermöglicht wird, wobei Verluste durch Kältebrücken vermieden werden sollen.

Dies wird bei dem Isolierungs-Halbschalenkörper der eingangs angeführten Art durch die in Anspruch 1 erfindungsgemäß gekennzeichneten Maßnahmen erzielt.

Der vorliegende Isolierungs-Halbschalenkörper ist somit als Winkel-Formteil mit zwei Schenkeln zur Umkleidung eines Rohrleitungs-Knies, insbesondere eines 90°-Knies, ausgebildet, wobei am einen Schenkel der wenigstens eine Steckerteil an der Außenseite und die wenigstens eine Stecker-Aufnahmevertiefung an der Innenseite und am anderen Schenkel für eine Verbindung mit einem identen, kreuzweise gewendeten Winkel-Formteil der Steckerteil an der Innenseite und die Stecker-Aufnahmevertiefung an der Außenseite vorgesehen sind. Die Steck-Verbindung mit dem Steckerteil einerseits und der entsprechend geformten Stecker-Aufnahmevertiefung andererseits ermöglicht eine dauerhafte, zuverlässige, im Bedarfsfall einfach lösbare Verbindung von zwei Halbschalenkörpern. Indem Steckerteil und Stecker-Aufnahmevertiefung symmetrisch angeordnet sind, ist lediglich ein einziges Formteil für die zur Umkleidung der Rohrleitung benötigten Halbschalenkörper erforderlich. Die symmetrische Steckverbindung ermöglicht demzufolge die Verwendung von identen Halbschalenkörpern zur Isolierung des Rohrleitungs-Knies, die deshalb ident sein können, da bei der Montage einer der Halbschalenkörper relativ zum anderen um 180° um die Längsachse gewendet wird und damit immer ein Steckerteil einer Aufnahmevertiefung gegenüberliegt. Dadurch sind Einsparungen in der Produktion bzw. in der Lagerhaltung erzielbar. Die Steckverbindungsteile können weiters so dimensioniert sein, dass die ihnen benachbarten bzw. sie umgebenden Grenzflächen der zusammengefügten Halbschalenkörper unter (leichtem) Druck aneinander anliegen, wodurch die Isolierungswirkung zusätzlich verbessert wird.

Für eine zweckmäßige Umkleidung des Rohrleitungs-Knies ist es von Vorteil, wenn die geraden Schenkel des Winkel-Formteils über einen schrägen, außen geradlinigen Verbindungs-Abschnitt verbunden sind, wobei sich die Steckerteile und die Stecker-Aufnahmevertiefungen jeweils genau bis zur Hälfte der Länge der Längsflächen des Verbindungsabschnitts erstrecken.

Zur umfangseitigen Umkleidung der Rohrleitung mit zwei entsprechenden Halbschalenkörpern ist es günstig, wenn die Grenzflächen zwei ebene streifenförmige Längsflächen zwischen einem inneren Hohlraum und der Außenseite sind. Im montierten Zustand der beiden Halbschalenkörper ist der innere Hohlraum vorzugsweise entsprechend der Rohrleitung zylinderförmig ausgebildet.

Eine besonders gut haltbare, nichtsdestoweniger bei der Montage einfach herzustellende Verbindung von zwei Isolierungs-Halbschalenkörpern kann erzielt werden, wenn als Steckerteil eine von der ersten Längsfläche hochstehende Leiste (in der Art eines "Keils" oder einer "Feder") und als Stecker-Aufnahmevertiefung eine Nut in der anderen Längsfläche vorgesehen sind. Demnach weist vorzugsweise jeder Isolierungs-Halbschalenkörper jeweils eine hochstehende Leiste und eine komplementär zur Leiste geformte Nut auf, welche in der Montagestellung, in welcher die Rohrleitung in dem von zwei so miteinander verbundenen Isolierungs-Halbschalenkörpern definierten Holhlraum aufgenommen ist, mit den entsprechenden Verbindungsmitteln (Nut bzw. Leiste) des anderen Halbschalenkörpers verbunden sind. Die Leisten (Feder)/Nut-Verbindung ermöglicht eine haltbare Befestigung der Isolierungs-Halbschalenkörper über die Längserstreckung der Rohrleitung.

Bei einer alternativen, materialsparenden Ausführungsform des Isolierungs-Halbschalenkörpers ist vorgesehen, dass mehrere zapfenförmige Steckerteile von der ersten Längsfläche hochstehen und dazu korrespondierende Aufnahmevertiefungen in der Art von Bohrungen in der anderen Längsfläche vorgesehen sind.

In vielen Fällen ist es ausreichend, wenn die Steckerteile reibschlüssig bzw. mit einem Presssitz in den Aufnahmevertiefungen befestigbar sind. Zur Erzielung einer dauerhaft haltbaren Verbindung kann es allerdings vielfach günstig sein, wenn der Steckerteil an seinem von der Grenzfläche abgewandten Endbereich einen Rast-Wulst für eine entsprechende Rast-Ausnehmung in der Stecker-Aufnahmevertiefung aufweist, so dass zusätzlich eine formschlüssige Verbindung ermöglicht wird. Zur Montage von zwei Isolierungs-Halbschalenkörpern werden demnach die Steckerteile in die entsprechenden Nuten eingeschoben, wofür im Bereich des Rast-Wulsts vorübergehend eine elastische Verformung erfolgt. Sobald der Steckerteil vollständig in der Nut aufgenommen ist, rastet der Rast-Wulst aufgrund der Materialelastizität formschlüssig in die Rast-Nut ein.

Zur einfachen, axialen Verbindung von erfindungsgemäßen Halbschalenkörpern mit vorgegebenen Längen zwecks Herstellung einer Ummantelung einer längeren, ein Rohr-Knie aufweisenden Rohrleitung ist es günstig, wenn an einer Stirnseite ein Rast-Vorsprung für eine axiale Verbindung mit einer entsprechenden Rast-Vertiefung eines axial anschließenden geradlinigen Halbschalenkörpers vorgesehen ist. Somit ist der zur Umkleidung eines Rohr-Knies eingerichtete Winkel-Formteil mit einem geraden Isolierungs-Abschnitt bestehend aus korrespondierenden geradlinigen Halbschalenkörpern verbindbar, um eine Rohrleitung mit einem geradlinigen Rohrleitungsstück und einem Rohr-Knie zu ummanteln. Selbstverständlich ist es je nach Länge des geradlinigen Rohrleitungsstücks möglich, mehrere gerade Isolierungs-Abschnitte axial aneinander anschließend vorzusehen. Die einzelnen Abschnitte der Isolierung für die Rohrleitung können ohne zusätzliche Maßnahmen wie Verkleben oder dergl. formschlüssig aneinandergefügt werden; als Abschnitte dienen dabei Paare von mit Hilfe der Steckverbindung aneinander befestigbaren Halbschalenkörpern, welche die Rohrleitung umfangseitig in ihrem gemeinsamen, vorzugsweise zylinderförmigen Hohlraum einschließen. Insbesondere ist es günstig, wenn an gegenüberliegenden Stirnseiten jeweils ein Rast-Vorsprung bzw. eine Rast-Vertiefung vorgesehen ist. Jeder Halbschalenkörper kann demnach einen z.B. halbkreisförmigen Rast-Vorsprung an einer ersten Stirnfläche und eine z.B. halbkreisförmige Rast-Vertiefung an der gegenüberliegenden Stirnfläche aufweisen, welche in die entsprechenden RastElemente (Rast-Vertiefung bzw. Rast-Vorsprung) eines daran anschließenden Halbschalenkörpers passen.

Im Hinblick auf eine gute Dämmwirkung ist es günstig, wenn der Isolierungs-Halbschalenkörper aus einem Schaumstoff-Material hergestellt ist. Dabei hat es sich insbesondere als vorteilhaft erwiesen, wenn der Halbschalenkörper aus expandiertem Polypropylen hergestellt ist, welches beispielsweise unter der Bezeichnung Neopolen^{®} im Handel erhältlich ist. Zweckmäßigerweise wird ein herkömmliches Schaumstoff-Material mit vergleichsweise hoher Festigkeit verwendet.

Bei einer besonders bevorzugten Ausführungsform ist vorgesehen, dass an einer Außenseite zumindest eine Aufnahme- bzw. Führungsnut für ein Kabel vorgesehen ist. Vorteilhafterweise sind an einer äußeren Hauptfläche zwei Aufnahme- bzw. Führungsnuten benachbart den beiden Längsrändern vorgesehen.

Im Hinblick auf eine unkomplizierte Montage des Kabels in der Aufnahme- bzw. Führungsnut (nachstehend einfach Kabelnut genannt) ist es günstig, wenn diese zumindest abschnittsweise nach außen hin offen ist, wobei in Abständen voneinander an zumindest einer Nutwand seitliche Vorsprünge zur Halterung des Kabels in der Aufnahme- bzw. Führungsnut vorgesehen sind. Bei der Montage wird das Kabel in die Aufnahme- bzw. Führungsnut eingesetzt, wobei die seitlichen Vorsprünge z.B. temporär elastisch verformt werden und anschließend in ihre unbelastete Stellung zurückkehren, in welcher sie das in der Kabelnut aufgenommene Kabel an einem ungewollten Herausfallen hindern. Die seitlichen Vorsprünge sind mit besonderem Vorteil alternierend an gegenüberliegenden Nutwänden vorgesehen, so dass eine Anordnung in der Art eines "Reissverschlusses" erzielt wird.

Im Hinblick auf eine zweckmäßige Ausgestaltung der Isolierung ist es von Vorteil, wenn der Isolierungs-Halbschalenkörper ein allgemein rechteckiges Querschnittsprofil aufweist.

Die Erfindung wird nachstehend anhand von in der Zeichnung dargestellten bevorzugten Ausführungsbeispielen, auf die sie jedoch nicht beschränkt sein soll, noch weiter erläutert. Im Einzelnen zeigen in der Zeichnung:
Fig. 1 zur allgemeinen, einführenden Erklärung eine axonometrische Ansicht eines Isolierungs-Halbschalenkörpers zum Umkleiden von Rohrleitungen oder dergl. mit Verbindungsmitteln, welche einerseits durch eine Leiste bzw. eine Nut an streifenförmigen Längsflächen und andererseits durch einen Rast-Vorsprung bzw. eine Rast-Vertiefung an gegenüberliegenden Stirnflächen gebildet sind, wie dies an sich aus dem Stand der Technik im Prinzip bekannt ist;
Fig. 2 eine axonometrische Ansicht des Isolierungs-Halbschalenkörpers gemäß Fig. 1, von einer äußeren Hauptfläche her gesehen, wobei zwei Aufnahme- bzw. Führungsnuten für Kabel ersichtlich sind;
Fig. 3 eine Stirnansicht des Isolierungs-Halbschalenkörpers gemäß den Fig. 1 und 2;
Fig. 4 eine teilweise unterbrochene Draufsicht auf den Isolierungs-Halbschalenkörper gemäß den Fig. 1 bis 3;
Fig. 5 eine axonometrische Ansicht eines erfindungsgemäßen Isolierungs-Halbschalenkörpers, welcher zur Isolierung eines abgebogenen Abschnitts, eines Rohrknies, einer Rohrleitung ausgebildet ist;
Fig. 6 eine Unteransicht des Isolierungs-Halbschalenkörpers gemäß Fig. 5, von einer äußeren Hauptfläche her gesehen, wobei zwei Aufnahme- bzw. Führungsnuten für Kabel ersichtlich sind;
Fig. 7 eine Seitenansicht des Isolierungs-Halbschalenkörpers gemäß den Fig. 5 und 6;
Fig. 8 eine Draufsicht auf den Isolierungs-Halbschalenkörper gemäß den Fig. 5 bis 7; und
Fig. 9 schematisch eine schaubildliche Darstellung eines modifizierten Halbschalenkörpers, nämlich mit Zapfen-Steckerteilen und Bohrungs-Aufnahmevertiefungen anstatt von sich längserstreckenden Steckerteilen und Aufnahmevertiefungen.

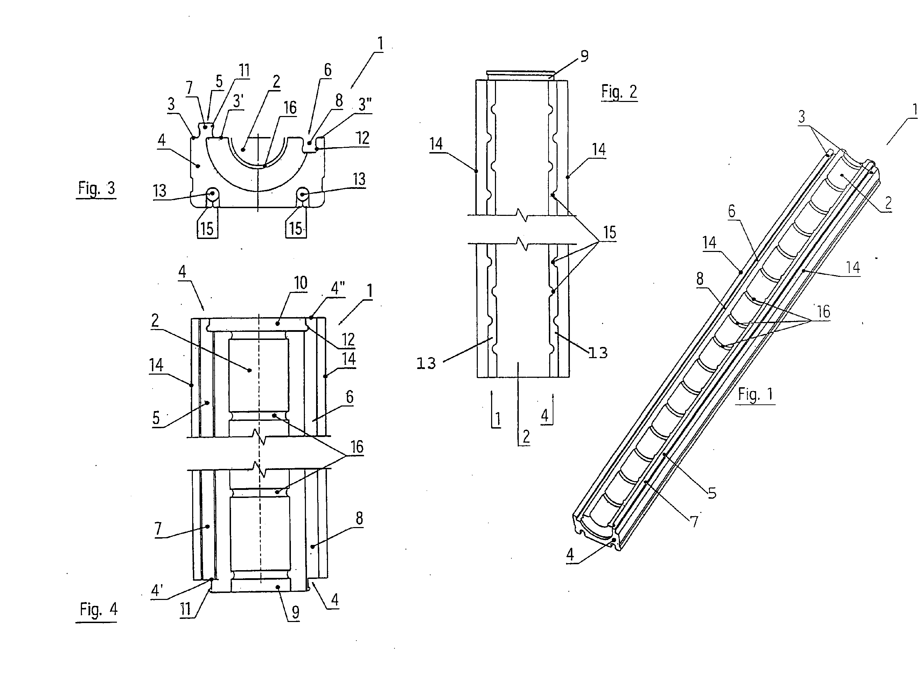

Die Fig. 1 bis 4 zeigen einen Isolierungs-Halbschalenkörper 1, wie er grundsätzlich aus dem Stand der Technik bekannt ist. Der Isolierungs-Halbschalenkörper 1 weist einen zentralen Hohlraum 2 auf, welcher gemeinsam mit einem entsprechenden Hohlraum 2 eines weiteren, identen, um 180° herumgedrehten Isolierungs-Halbschalenkörpers 1 einen im Wesentlichen zylinderförmigen Innenraum der Umkleidung definiert, in welchem eine in der Zeichnung nicht dargestellte Rohrleitung oder dergl. aufnehmbar ist. Bei der Montage der Isolierung wird die Rohrleitung im entsprechend geformten Hohlraum 2 des ersten Halbschalenkörpers 1 aufgenommen, woraufhin der zweite Halbschalenkörper 1 aufgesetzt wird, so dass die Rohrleitung vollumfänglich im zylinderförmigen Innenraum eingeschlossen ist. Die Halbschalenkörper 1 weisen, abweichend vom Stand der Technik, außen ein rechteckiges Querschnittsprofil auf, wobei sich im montierten Zustand mit zwei als Hälften zusammengefügten Halbschalenkörpern 1 ein im Wesentlichen quadratisches Querschnittsprofil ergibt.

Die Rohrleitung kann in axialer Richtung abschnittsweise umkleidet werden, indem umfangseitig an der Rohrleitung befestigte Paare von Halbschalenkörpern 1 nacheinander montiert bzw. aneinandergefügt werden. Die Zahl der zur Umkleidung der Rohrleitung benötigten Abschnitte richtet sich nach der Länge der Rohrleitung bzw. der Länge der Halbschalenkörper 1. Auf diese Weise wird eine flexible Umkleidung einer beliebigen Rohrleitung ermöglicht, wobei bei der Montage vor Ort weitestgehend weitere Bearbeitungsschritte, wie ein Zerteilen der Isolierungs-Halbschalenkörper 1, entfallen können.

Zur lösbaren Montage der Halbschalenkörper 1 an der Rohrleitung sind Verbindungsmittel entlang korrespondierender Grenz- bzw. Anlageflächen vorgesehen. Als Grenzflächen dienen einerseits zwei streifenförmige, allgemein ebene Längsflächen 3 zwischen dem zentralen Hohlraum 2 und der Außenseite; andererseits erfolgt eine Verbindung der zur umfangseitigen Ummantelung zusammengefügten Halbschalenkörper 1 in axialer Richtung an gegenüberliegenden Stirnseiten 4, welche als Anlageflächen für axial anschließende Halbschalenkörper 1 ausgebildet sind.

Wie insbesondere aus Fig. 1 bzw. Fig. 3 ersichtlich, sind als Verbindungsmittel an den Längsflächen 3 einerseits ein von der einen Grenz- bzw. Längsfläche 3' abstehender Steckerteil 5 und andererseits eine in der anderen Grenz- bzw. Längsfläche 3" angeordnete Stecker-Aufnahmevertiefung 6 vorgesehen. Bei der in den Fig. 1 bis 4 dargestellten Ausführungsform ist als Steckerteil 5 eine von der ersten Längsfläche 3' hochstehende, durchgehende Leiste bzw. Feder 7 und als Stecker-Aufnahmevertiefung 6 eine Nut 8 in der anderen Längsfläche 3" vorgesehen. Indem der Steckerteil 5 und die Stecker-Aufnahmevertiefung 6 in ihrer Position symmetrisch eingerichtet bzw. angeordnet sind, können ident ausgebildete Halbschalenkörper 1 zur Umkleidung der Rohrleitung verwendet werden. Wie insbesondere aus Fig. 3 ersichtlich, sind der Steckerteil 5 bzw. die Stecker-Aufnahmevertiefung 6 mittig an den Längsflächen 3 angeordnet, so dass beidseitig der Verbindungsmittel im Wesentlichen ebene Abschnitte der Längsflächen 3 belassen sind.

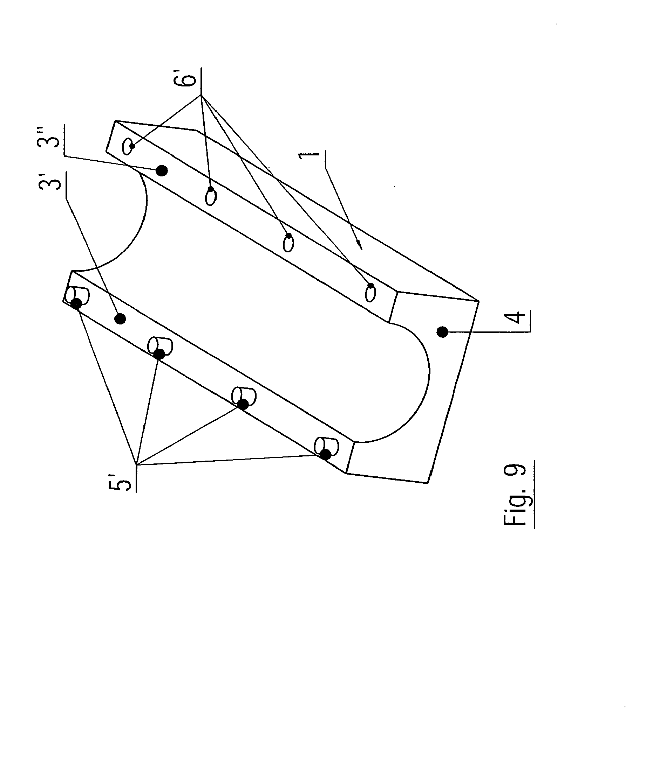

Alternativ zur Leisten-Nut-Verbindung 7, 8 können bei einer materialsparenden Ausführung jedoch auch, abweichend vom Stand der Technik diskontinuierliche, z.B. zapfenförmige Steckerteile 5' von der ersten als Grenz- bzw. Anlagefläche für einen weiteren Halbschalenkörper 1 dienenden Längsfläche 3' hochstehen, wobei in der anderen Längsfläche 3" entsprechend den Zapfen geformte Aufnahmen bzw. Bohrungen 6' vorgesehen sind, vgl. Fig. 9. Auch bei dieser Ausgestaltung sind an den beiden zur Verbindung mit einem anderen Halbschalenkörper vorgesehenen Längsflächen 3 jeweils verschiedene Verbindungsmittel - also Zapfen an der einen Längsfläche 3' und Aufnahmen bzw. Bohrungen an der anderen Längsfläche 3" - vorgesehen, so dass insgesamt eine symmetrische Anordnung erzielt wird, welche die Verbindung identer Halbschalenkörper 1 ermöglicht.

Wie aus dem Längsschnitt durch den Halbschalenkörper 1 gemäß Fig. 4 ersichtlich, ist an der einen Stirnseite 4' des Halbschalenkörpers 1 ein Rast-Vorsprung 9 und an der gegenüberliegenden Stirnseite 4" eine komplementär zum Rast-Vorsprung 9 geformte Rast-Vertiefung 10 vorgesehen, welche eine axiale Verbindung mit entsprechenden Rast-Elementen 9, 10 von axial anschließenden Halbschalenkörpern 1 ermöglichen. Der Rast-Vorsprung 9 bzw. die Rast-Vertiefung 10 weisen im gezeigten Ausführungsbeispiel je eine halbkreisförmige Form, welche dem Profil des zentralen Hohlraums 2 folgt, auf, wie insbesondere Fig. 1 bzw. Fig. 3 entnommen werden kann.

Zur Befestigung der Halbschalenkörper 1 wäre prinzipiell eine rein reibschlüssige Verbindung bzw. ein Passsitz der Verbindungsmittel 5, 6; 5', 6'; 9, 10 denkbar; bei den in der Zeichnung dargestellten Ausführungsbeispielen verfügen die Steckerteile 5, also z.B. die hochstehende Leiste 7 an der Längsfläche 3' bzw. der Rast-Vorsprung 9 an der Stirnfläche 4', zudem jeweils über einen Rast-Wulst 11, welcher zur formschlüssigen Verrastung der Steckerteile 5 in den entsprechend geformten Rast-Ausnehmungen 12 in der Stecker-Aufnahmevertiefung 6 dient. Wie insbesondere aus den Fig. 3 und 4 ersichtlich, sind die Rast-Wulste 11 bzw. die Rast-Ausnehmungen 12 an den von der jeweiligen Grenz- bzw. Anlagefläche, d.h. von den Längsflächen 3 bzw. den Stirnflächen 4, abgewandten Enden der Steckerteile 5 bzw. den Bodenbereichen der Aufnahmevertiefungen 6, 12 vorgesehen.

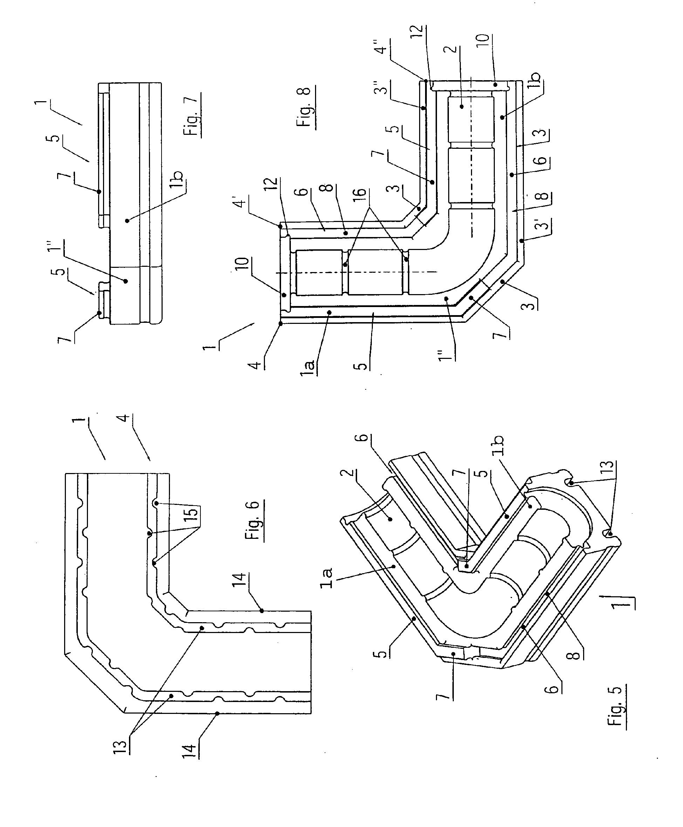

Der Halbschalenkörper 1 weist ferner, wie insbesondere Fig. 1 bzw. Fig. 3 entnehmbar ist, außenseitig an einer Hauptfläche zwei Aufnahme- bzw. Führungsnuten, kurz Kabelnuten, 13 für - in der Zeichnung nicht dargestellte - Kabel auf (vgl. auch Fig. 6), welche benachbart den Längsrändern 14 vorgesehen sind. Die Kabelnuten 13 sind nach außen hin offen, so dass die Kabel bei der Montage längsseitig in die Nuten 13 eingesetzt werden können. An den einander gegenüberliegenden Nutwänden sind in einer alternierenden Anordnung seitliche Vorsprünge 15 vorgesehen (vgl. insbesondere Fig. 6), welche ein unbeabsichtigtes Herausrutschen des Kabels aus der jeweiligen Aufnahme- bzw. Führungsnut 13 zuverlässig verhindern. Beim Einsetzen des Kabels werden die seitlichen Vorsprünge 15 temporär deformiert, wofür eine gewisse Eigenelastizität des Materials erforderlich ist.

Aus den Fig. 1, 4 und 8 sind schließlich Halte-Stege 16 ersichtlich, welche umfangseitig in dem zentralen Hohlraum 2 zur Aufnahme der Rohrleitung angebracht sind. Die Halte-Stege 16 liegen im montierten Zustand der Isolierung an der entsprechenden Rohrleitung unter Druck an, um so ein Verrutschen der Isolierungs--Halbschalenkörper 1 zu verhindern.

Vorteilhafterweise ist der gesamte Halbschalenkörper 1 einstückig aus einem Schaumstoff-Material hergestellt, wodurch eine sehr gute Dämmwirkung erzielbar ist; als Schaumstoff wird insbesondere im Handel unter dem Namen Neopolen^{®} erhältliches extrudiertes Polypropylen verwendet.

In den Fig. 5 bis 8 ist in den Fig. 1 bis 4 entsprechenden Darstellungen ein winkelförmiger Isolierungs-Halbschalenkörper 1 gemäß der Erfindung gezeigt, der nach dem vorstehend anhand der Fig. 1 bis 4 und 9 erläuterten Grundprinzip ausgeführt ist, wobei aber besondere Vorkehrungen im Hinblick auf die winkelförmige Ausführung getroffen sind. Zur Vermeidung von Wiederholungen soll nachfolgend lediglich auf die Unterschiede zum anhand der Fig. 1 bis 4 erörterten Ausführungsbeispiel eingegangen werden.

Der in den Fig. 5 bis 8 dargestellte Isolierungs-Halbschalenkörper 1 ist als Winkel-Formteil zur Umkleidung eines 90°-Knies einer Rohrleitung eingerichtet. Hiefür sind zwei gerade Schenkel 1a, 1b des Halbschalenkörpers 1 über einen Verbindungs-Abschnitt 1" verbunden. Der innere Hohlraum 2 des Halbschalenkörpers 1 weist entsprechend dem Verlauf der Rohrleitung in den geraden Schenkeln 1a, 1b die Gestalt eines in Längsrichtung halbierten Zylinders auf und ist im Verbindungs-Abschnitt 1" viertelkreisförmig gebogen. Bei der gezeigten Ausführung verlaufen gerade Längsflächen 3 des Verbindungs-Abschnitts 1" in einem Winkel von 45° zu den Längsflächen 3 der geraden Schenkel 1a, 1b; selbstverständlich wäre jedoch auch eine entsprechend dem Verlauf der Rohrleitung kurvenförmige Anordnung denkbar.

Zur Ummantelung der Rohrleitung sind die Längsflächen 3 der geraden Schenkel 1a, 1b ebenso wie jene des Verbindungsabschnitts 1" als Anlageflächen für einen entsprechenden Winkel-Formteil ausgebildet, wobei zur lösbaren Befestigung der beiden Winkel-Formteile Verbindungsmittel in der Art der vorstehend erläuterten Leisten-Nut-Verbindung 7, 8 vorgesehen sind. Wie insbesondere aus Fig. 7 ersichtlich, sind die Verbindungsmittel 7, 8 zur Ausbildung identer, symmetrischer Winkel-Formteile "über Kreuz", d.h. jeweils an vertauschten Längsflächen 3 der geraden Schenkel 1a, 1b bzw. des Verbindungsabschnitts 1", angeordnet. Demnach sind am einen Schenkel 1a der Steckerteil 5 an der Außenseite und die Stecker-Aufnahmevertiefung 6 an der Innenseite und am anderen Schenkel 1b der Steckerteil 5 an der Innenseite und die Stecker-Aufnahmevertiefung 6 an der Außenseite vorgesehen, so dass eine Verbindung mit einem identen, kreuzweise gewendeten Winkel-Formteil ermöglicht wird.

Die Leisten 7 bzw. die Nuten 8 erstrecken sich im Verbindungsabschnitt 1" jeweils genau bis zur Hälfte der Länge der Längsflächen 3 des Verbindungsabschnitts 1".

Der gezeigte Winkel-Halbschalenkörper 1 kann mit besonderem Vorteil mit den in den Fig. 1 bis 4 dargestellten geraden Halbschalenkörpern 1 kombiniert werden, um so die vollständige Umkleidung einer Rohrleitung mit geraden und abgewinkelten Abschnitten zu ermöglichen. Hiefür sind an den gegenüberliegenden Stirnflächen 4 des als Winkel-Formteil ausgebildeten Isolierungs-Halbschalenkörpers 1 Rast-Vertiefungen 10 vorgesehen, welche gerade in die Rast-Vorsprünge 9 der geraden Halbschalenkörper 1 gemäß den Fig. 1 bis 4 passen.

## Patentansprüche

1. Isolierungs-Halbschalenkörper (1) zum Umkleiden von Rohrleitungen oder dergl., mit Verbindungsmitteln zur Verbindung mit anderen Halbschalenkörpern (1) entlang zweier korrespondierender Grenzflächen (3, 4), die zwei ebene streifenförmige Längsflächen (3) zwischen einem inneren Hohlraum (2) und der Außenseite sind, wobei als Verbindungsmittel einerseits wenigstens ein von der einen Grenzfläche (3', 4') abstehender Steckerteil (5) und andererseits wenigstens eine in der anderen Grenzfläche (3", 4") angeordnete Stecker-Aufnahmevertiefung (6) vorgesehen sind, und die Anordnung von Steckerteil (5) und Stecker-Aufnahmevertiefung (6) für eine Verbindung ident ausgebildeter Halbschalenkörper (1) symmetrisch eingerichtet ist, **dadurch gekennzeichnet, dass** er als Winkel-Formteil mit zwei Schenkeln (1a, 1b) zur Umkleidung eines Rohrleitungs-Knies ausgebildet ist, wobei am einen Schenkel (1a) der wenigstens eine Steckerteil (5) an der Außenseite und die wenigstens eine Stecker-Aufnahmevertiefung (6) an der Innenseite und am anderen Schenkel (1b) für eine Verbindung mit einem identen, kreuzweise gewendeten Winkel-Formteil der Steckerteil (5) an der Innenseite und die Stecker-Aufnahmevertiefung (6) an der Außenseite vorgesehen sind.

2. Isolierungs-Halbschalenkörper nach Anspruch 1, **dadurch gekennzeichnet, dass** die geraden Schenkel (1') des Winkel-Formteils über einen schrägen, außen geradlinigen Verbindungs-Abschnitt (1") verbunden sind, wobei sich die Steckerteile (5) und die Stecker-Aufnahmevertiefungen (6) jeweils genau bis zur Hälfte der Länge der Längsflächen (3) des Verbindungsabschnitts (1") erstrecken.

3. Isolierungs-Halbschalenkörper nach Anspruch 1 oder 2, **dadurch gekennzeichnet, dass** als Steckerteil (5) eine von der ersten Längsfläche (3') hochstehende Leiste (7) und als Stecker-Aufnahmevertiefung (6) eine Nut (8) in der anderen Längsfläche (3") vorgesehen ist.

4. Isolierungs-Halbschalenkörper nach Anspruch 1 oder 2, **dadurch gekennzeichnet, dass** mehrere zapfenförmige Steckerteile von der ersten Längsfläche (3') hochstehen und dazu korrespondierende Aufnahmevertiefungen in der Art von Bohrungen in der anderen Längsfläche (3") vorgesehen sind.

5. Isolierungs-Halbschalenkörper nach einem der Ansprüche 1 bis 4, **dadurch gekennzeichnet, dass** der Steckerteil (5) an seinem von der Grenzfläche (3) abgewandten Endbereich einen Rast-Wulst (11) für eine entsprechende Rast-Ausnehmung (12) in der Stecker-Aufnahmevertiefung (6) aufweist.

6. Isolierungs-Halbschalenkörper nach einem der Ansprüche 1 bis 5, **dadurch gekennzeichnet, dass** an einer Stirnseite (4') ein Rast-Vorsprung (9) für eine axiale Verbindung mit einer entsprechenden Rast-Vertiefung (10) eines axial anschließenden geradlinigen Halbschalenkörpers (1) vorgesehen ist.

7. Isolierungs-Halbschalenkörper nach Anspruch 6, **dadurch gekennzeichnet, dass** an gegenüberliegenden Stirnseiten (4', 4") jeweils ein Rast-Vorsprung (9) bzw. eine Rast-Vertiefung (10) vorgesehen ist.

8. Isolierungs-Halbschalenkörper nach einem der Ansprüche 1 bis 7, **dadurch gekennzeichnet, dass** er aus einem Schaumstoff-Material hergestellt ist.

9. Isolierungs-Halbschalenkörper nach Anspruch 8, **dadurch gekennzeichnet, dass** er aus expandiertem Polypropylen hergestellt ist.

10. Isolierungs-Halbschalenkörper nach einem der Ansprüche 1 bis 9, **dadurch gekennzeichnet, dass** an einer Außenseite zumindest eine Aufnahme- bzw. Führungsnut (13) für ein Kabel vorgesehen ist.

11. Isolierungs-Halbschalenkörper nach Anspruch 10, **dadurch gekennzeichnet, dass** an einer äußeren Hauptfläche zwei Aufnahme- bzw. Führungsnuten (13) benachbart den Längsrändern (14) vorgesehen sind.

12. Isolierungs-Halbschalenkörper nach Anspruch 10 oder 11, **dadurch gekennzeichnet, dass** die Aufnahme- bzw. Führungsnut (13) zumindest abschnittsweise nach außen hin offen ist, wobei in Abständen voneinander an zumindest einer Nutwand seitliche Vorsprünge (15) zur Halterung des Kabels in der Führungsnut (13) vorgesehen sind.

13. Isolierungs-Halbschalenkörper nach einem der Ansprüche 1 bis 12, **dadurch gekennzeichnet, dass** er ein allgemein rechteckiges Querschnittsprofil aufweist.
